# EUROPÄISCHE PATENTSCHRIFT

(11) **EP 1 458 308 B1**
(45) Veröffentlichungstag und Bekanntmachung des Hinweises auf die Patenterteilung: **03.09.2014**
(21) Anmeldenummer: 02796665.4
(22) Anmeldetag: 17.12.2002
(51) Int. Cl.: A61C 13/097

(54) **ZAHNSATZ**
SET OF TEETH
ENSEMBLE DE DENTS

(30) Priorität: 23.12.2001 DE 10163105
(43) Veröffentlichungstag der Anmeldung: 22.09.2004
(73) Patentinhaber: pritidenta B.V., 4615 AA Bergen op Zoom (NL)
(72) Erfinder: MÖNKMEYER, Ulrich, 6005 Luzern (CH)
(74) Vertreter: Mahler, Peter
(86) Internationale Anmeldenummer: PCT/EP2002/014429
(87) Internationale Veröffentlichungsnummer: WO 2003/055409

(56) Entgegenhaltungen:
- DE-A- 19 837 748
- DE-U- 29 716 622
- US-A- 4 642 052
- US-A- 5 951 289

## Beschreibung

Die Erfindung betrifft einen Zahnsatz aus vorgefertigten Zähnen.

"Okklusion" ist in der Zahnheilkunde der gebräuchliche Terminus für den Kontakt zwischen Ober- und Unterkieferzähnen. Von einer zu rekonstruierenden Okklusion und damit Kaufiläche erwartet man, dass die Zahnkontakte allseitig, gleichmäßig und gleichzeitig in allen vier Stützzonen auftreten und bei funktionellen Bewegungen (vornehmlich Protrusions-, Laterotrusions- und Mediotrusionsbewegungen) des Unterkiefers zum Oberkiefer ein störungsfreies Gleiten zwischen allen antagonistischen Seitenzähnen besteht. Das gilt heute für die individuelle Rehabilitation.

Namensgebend für die verschiedenen Okklusionskonzepte sind deren Charakteristika hinsichtlich der Zentrik ("point-centric", "long-centric", "freedomin-centric") und hinsichtlich der Relationen bei der Laterotrusion, Mediotrusion und Protrusion ("Eckzahnführung", "Gruppenführung"). Die zusätzliche Berücksichtigung der Verhältnisse auf der Mediotrusionsseite ("Balanceseite") führte zur Einteilung der verschiedenen Okklusionskonzepte in drei Obergruppen:
1. die vollbalancierten Okklusionstypen,
2. die einseitig balancierten Okklusionstypen und
3. die Front-/Eckzahn - geführten Okklusionstypen.

Die frühen Okklusionskonzepte entstanden im Kontext der Problematik bei der tofialprothetischen Versorgung. Aus der Zielsetzung einer zur Sicherung der adhäsiven Verankerung möglichst kippstabilen Lagerung der Prothese, mussten sich zwangsläufig vollbalancierte Konzepte entwickeln, bei denen die Bedeutung einzelner funktioneller Elemente vernachlässigt wurde. *(Bonwill; Spee, Mühlstein Konzept; Gysi, Mörser-Pistill Konzept; Monson, Kalotten Konzept)* Folgerichtig hatten die für diese Methoden entwickelten Fabrikzähne keine Funktionskauflächen. Das Konzept der organischen Okklusion relativierte die Bedeutung der bei den Exkursivbewegungen vorhandenen Kontakte. Es geht von der Vorstellung aus, dass Exkursionen bei der Kaubewegung nicht zahngeführt sind. *(Front-*/*Eckzahngeführte Okklusion, Stallard, Stuart).*

Ein einheitliches Okklusionskonzept für die Totalprothetik und das natürliche Gebiss wurde bislang nicht postuliert. Auch die Hoffnung über die Beschreibung des Naturzustandes, durch Erkenntnisse anthropologischer Studien, das ideale Okklusionskonzept zu finden sind gescheitert. *(Begg, Beyron)*

Die Grundlagen für das Konzept des "freedom-in-centric" sind, dass die Höcker möglichst durch Dreipunktkontakte auf einem fachen Bereich in der zentralen Fossa, der nicht naturgegeben, sondern entweder aufgrund einer entsprechend individuell modellierten Restauration oder durch Einschleifen entstanden ist, fixiert sind. *(künstliche Okklusionsform, Posselt, Schuyler)*

Das Konzept der "Organischen Disklusion" geht von einer sich gegenseitig schützenden Funktion von Front- und Seitenzähnen aus. *(Stallart, Stuart)* Es ist für die individuelle Restauration heute die verbreitetste Lehre und Technik, da es durch das angewandte Additive Verfahren *(Aufwachstechnik, Thomas)* bei der Erstellung der Wachsmodellation erheblich präzisere Ergebnisse erbringt, als die substraktive Formgebung.

Erst in jüngster Zeit wurden die sich daraus ergebenden modernen Anforderungen für individuelle Funktionskauflächen postuliert. *(Freesmeyer, Sieber)* Auch die Eigenschaften für Fabrikzähne für die herausnehmbare Prothetik wurden neu beschrieben. Besonders die Kombination des Studiums der natürlichen Vorlage mit geometrisch-mechanischen Überlegungen, hat zu dem Konzept der induktiv-deduktiven Funktionskaufläche geführt. *(Mönkmeyer)*

Da das Prinzip der additiven Formgebung bei der Herstellung von individuellem Zahnersatz mit Fabrikzähnen nicht angewandt werden kann, müssen diese so vorgefertigt sein, dass sie im substraktiven Verfahren individualisiert werden können. Die in diesem Zusammenhang postullerte Anordnung der Antagonistenkontakte In Relation zu der sagittalen und transversalen Kompensationskurve hat zur Entwicklung von Zähnen geführt, die in der Interkuspidation in vertikaler Richtung abgestützt sind und die sowohl im vollbalancierten, einseitig balancierten und Front- Eckzahngeführten Okklusionskonzept funktionieren. Solche Zahnsätze sind z.B. aus der

DE 198 37 748 A bekannt, die Zahnsätze beschreibt, bei denen die Stampfhöcker eines Antagonisten in interkuspidationsstellung an drei oder mehr Kontaktpunkten in der Fossa des anderen Antagonisten zur Anlage gelangt. Die Kontaktpunkte sind an einer durch die Bewegung der Kieferkondylen bestimmten sagittalen und transversalen Kompensationskurve angeordnet. Solche Zahnsätze können ebenso in Zahn zu Zahn, wie in Zahn zu zwei Zahn Beziehung, In Klasse I, II und III Fällen und im Kreuzbiss aufgestellt werden. *(Mönkneyer)*

Um Laterotrusions- und Mediotrusionsstörungen auf jeden Fall zu vermeiden, und bei eintretenden Abrasionserscheinungen eine harmonische Übernahme der Führungsflächen zu gewährleistet wird in der Individuellen Restauration empfohlen, eine von anterior nach posterior gleichmäßig zunehmende Disklusion der Seitenzähne zu gestalten. Erreicht wird das, In dem man die Neigung der Höckerabhänge sequentiell um 5° pro Zahn abnehmen lässt. *(Slavicek)*

In der DE 2916 622 U1 werden - wie auch schon von *Hildebrandt -* Abrasionszähne beschrieben, deren Abrasionen einem natürlichen Abrasionszustand nachgeformt sind, indem aus ursprünglichen Kontaktpunkten Kontaktflächen ausgebildet werden.

Die Diskussion um die Okklusionskonzepte ist eng verbunden mit dem Phänomen der Abrasion und Attrition. Die Frage, inwieweit Abrasion und Attrition als physiologisches oder pathologisches Phänomen einzuordnen ist, konnte bislang nicht endgültig geklärt werden. *(Berry)*

Aus diesen Forderungen für die individuelle Prothetik abgeleitete Fabrikzähne sollten Abrasionsvorgänge vorweg nehmen. Abrasionsvorgänge im Zusammenhang mit Okklusion sind hochgradig sensible Vorgänge. Sogenannte Abrasionszähne erfüllen diesen Anspruch nicht, da ihre Abrasionen nicht in einem methodischen Zusammenhang mit den Abläufen im komplexen stomatognathen System stehen. Von *Schulz-Bongard* wurde postuliert, dass das zentrale Problem in diesem Zusammenhang der Verlust der zentralen Relation ist.

Es ist Aufgabe der Erfindung, Zahnsätze zu schaffen, die bei funktionellen Bewegungen des Unterkiefers zum Oberkiefer ein störungsfreies Gleiten zwischen allen antagonistischen Seitenzähnen ermöglichen, ohne die zentrale Relation in der Vertikalen und Horizontalen zu verlieren, fabrikmäßig herstellbar und im Subtraktionsverfahren individualisietbar sind.

Die Aufgabe der erfindungsgemäß durch einen Zahnsatz aus vorgefertigten Zähnen für die Molaren und/oder Prämolaren des Gebisses gelöst, bestehend aus ersten aus einer für den einen Kiefer vorgesehenen Gruppe von Zähnen und aus zweiten aus einer für den anderen Kiefer vorgesehenen Gruppe von Antagonisten, wobei in der Fossa eines Zahnes jeweils mindestens drei Zentrikkontaktpunkte vorgesehen sind, an denen in Interkuspidationsstellung ein Stampfhöcker des Antagonisten zur Anlage gelangt, sofern die Zähne in einem Kausimulator in Okklusion gebracht werden und die Kontaktpunkte auf einer durch die Bewegung der Kieferkondylen des Simulators bestimmten Kompensationskurve angeordnet sind. Der erfindungsgemäße Zahnsatz ist dadurch gekennzeichnet, dass die Zentrikkontaktpunkte jeweils auf einem

Kugelausschnitt liegen und in wenigstens einer Bewegungsspur Abrasionen angelegt sind, die wenigstens einen der punktförmigen Kontakte nicht auflösen. Die Abrasionen können auch so angelegt sein, dass mehr als ein oder alle punktförmigen Kontakte erhalten bleiben.

Auf Basis von induktiven und deduktiven Überlegungen wurden daher natürliche unabradierte Dentitionen kopiert, nach den Regeln der Lehre in Kausimulatoren in Okklusion gebracht und auf ihre Tauglichkeit, die angesprochenen Okklusionskonzepte betreffend, überprüft. Die Ergebnisse zeigen, dass diese Naturzähne nur sehr eingeschränkt nach den differenten Systemen funktionieren. Die Zähne wurden daraufhin im Sinne der PCT/EP06079 modifiziert. Es wurden die Stampfhöcker und die Fossae dergestalt verändert, dass jeder Stampfhöcker an drei Punkten seiner antagonistischen Fossa in der Zentrik (IKP) zur Anlage kommt. Diese Anlagepunkte wurden als kugelausschnittförmige Konvexitäten gestaltet, was bewirken soll, dass eine Konkavität zwischen dem Kontakt und dem Höckergrad angeordnet ist. Außerdem wurden sie in der vertikalen Dimension auf den Kompensationskurven postiert. Diese Modifikationen ergaben die o. g. Möglichkeiten.

Anschließend wurden bei einer Gelenkbahnneigung von 40° die Höckerabhänge in Protrusions-, Laterotrusions- und Mediotrusionsspur eingeschliffen. Alle eine glatte Laufbahn störenden Höckeranteile wurden planiert. Dabei wurden die Zentrikkontakte dank ihrer Anordnung nicht aufgelöst, was im Gegensatz zur DE 297 16 622 U1 einen Erhalt des vertikalen Abstandes und der Zentralen Relation der Kiefer zueinander gewährleistet. Um eine von anterior nach posterior gleichmäßig zunehmende Disklusion zu erreichen, wurden die Abrasionsneigungswinkel sequentiell von anterior nach posterior um ca. 5° abnehmend gestaltet.

Es hat sich erwiesen, dass nach dieser Methode hergestellte Zähne:
1. In der größten Anzahl aller Fälle (> 55%) unmodifiziert funktionieren;
2. Durch einfache, subtraktive Maßnahmen individualisiert werden können, so dass sie auch in der Mehrzahl aller Fälle (>97%) funktionieren;
3. Nach sachgemäßer Modifikation noch den Anspruch der vertikalen Abstützung erfüllen;
4. In allen Okklusionskonzepten funktionieren;
5. im vollbalancierten und einseitig balancierten Okklusionskonzept weniger Modifikation erforderlich machen, als Zähne im Sinne von PCT/EP99/06079.
6. Einer geringeren Abnutzung unterliegen, als Zähne, die in der Zentrik nicht horizontal und vertikal, sondern auf schiefen Ebenen abgestützt sind.

Vorzugsweise ist die Neigung der Abrasionsflächen auf der Mediotrusionsseite 3 bis 7 Grad und insbesondere 5 Grad geringer als auf der Lateriotrusionsseite.

Die Neigung der Abrasionsflächen benachbarter Zähne kann sequentiell von anterior nach posterior abnehmen, und zwar insbesondere um jeweils 3 bis 7 und vorzugsweise um 5 Grad.

Als bevorzugte Werte für die Neigung der Abrasionsfläche für den Prämolaren 4 hat sich auf der Mediotrusionsseite zwischen 35 und 42 Grad, insbesondere 40 Grad, herausgestellt. Auf der Laterotrusionsseite beträgt der bevorzugte Winkel 40 bis 47 Grad, vorzugsweise 45 Grad. Die weiteren eventuell zu dem Zahnsatz gehörenden Zähne folgen in ihrer Neigung der Abrasionsflächen dann dem obigen Schema.

Ein erfindungsgemäßer Zahnsatz kann aus den Prämolaren bzw. Molaren 4, 5, 6 und 7 bestehen, wobei die Neigung der Abrasionsflächen folgendem Schema entspricht:

| Zahn | Höckerneigung auf der | |
|---|---|---|
| | Mediotrusionsseite | Laterotrusionsseite |
| 4 | 35°-42°, insbesondere 40° | 40°-47°, insbesondere 45° |
| 5 | 30°-37°, insbesondere 35° | 35°-42°, insbesondere 40° |
| 6 | 25°-32° insbesondere 30° | 30°-37°, insbesondere 35° |
| 7 | 20°-27°, insbesondere 25° | 25°-32°, insbesondere 30° |

Die Erfindung wird im folgenden anhand der beigefügten Abbildungen näher erläutert:
**Fig. 1** zeigt ein Antagonistenpaar der Prämolaren 4 im Schnitt;
**Fig. 2** zeigt ein Antagonistenpaar der Prämolaren 5 im Schnitt;
**Fig. 3** zeigt ein Antagonistenpaar der Molaren 6 im Schnitt;
**Fig. 4** zeigt ein Antagonistenpaar der Molaren 7 im Schnitt.
**Fig. 5** zeigt eine Oberkiefer- und Unterkieferzahnreihe mit dem Kondylus bzw. der Gelenkpfanne;
**Fig. 6** zeigt eine Ausschnittvergrößerung aus Fig. 5.

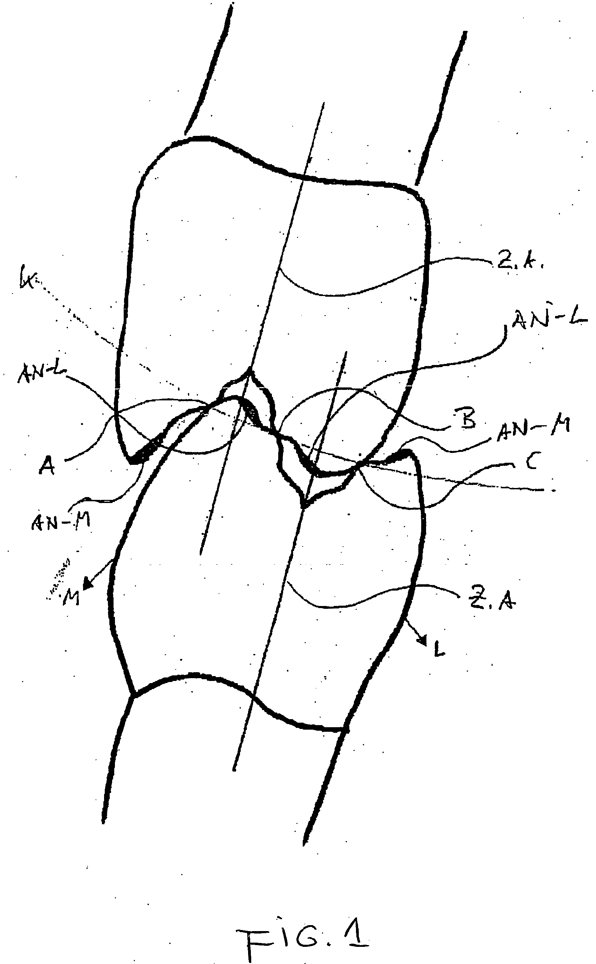

In **Fig. 1** ist ein Zahnsatz aus den Prämolaren 4 des Ober- bzw. Unterkiefers zu erkennen und **K** kennzeichnet die transversale Kompensationskurve, Z. A. kennzeichnet die Zahnachse, der Pfeil **M** zeigt die Mediotrusionsbewegung und der Pfeil L die Laterotrusionsbewegung an.

Jeder Zahn weist in der Fossa seines jeweiligen Antagonisten mindestens drei Kontaktpunkte auf, an denen seine Stampfhöcker in Interkuspidationsstellung zur Anlage gelangen. Die Kontaktpunkte kommen auf Kugelausschnitten zur Anlage und sind auf der durch die Bewegung der Kieferkondylen bestimmten Kompensationskurven angeordnet und mit A, B, C gekennzeichnet. Die Neigung der Abrasionsflächen beträgt auf der Laterotrusionsseite (AN-L) 45° und auf der Mediotrusionsseite (AN -M) 40°.

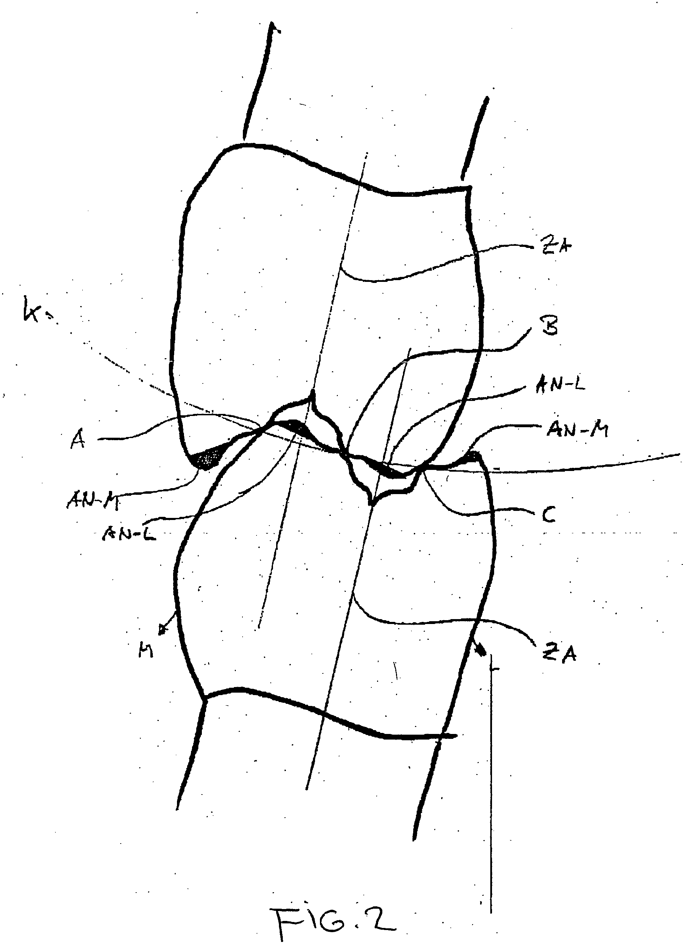

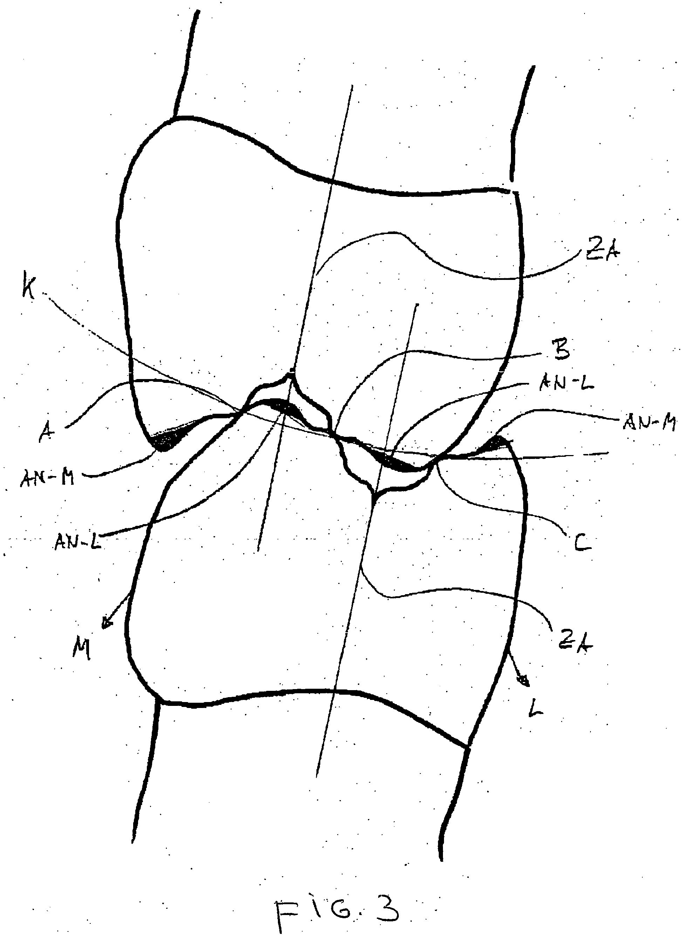

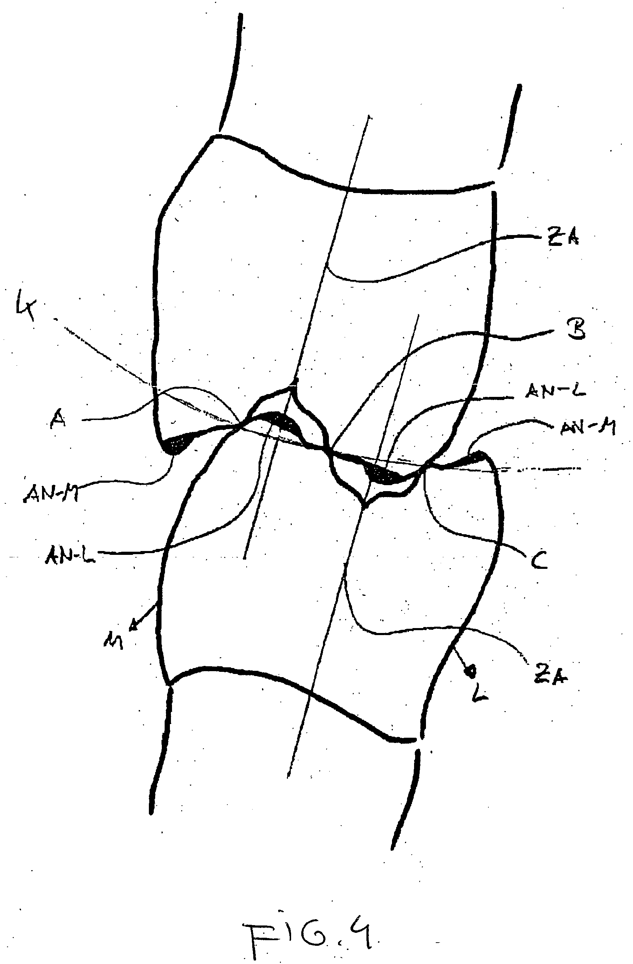

**Fig. 2** zeigt das dem Antagonistenpaar aus Fig. 1 benachbarte Antagonistenpaar, nämlich die Prämolaren 5. Die Neigung der Abrasionsflächen dieses Zahnpaares, das zu den Prämolaren 4 posterior liegt, nimmt um eine Sequenz von 5° ab. (Gleiches gilt für die Molaren 6 und 7 - siehe **Fig. 3** **und** **4**). Die Neigung der Abrasionsflächen der Prämolaren 5 beträgt auf der Laterotrusionsseite 40° und auf der Mediotrusionsseite 35° Damit wird - im Gegensatz zu *Slavicek -* eine Öffnung des Winkels des gesamten Höckerabhanges nicht notwendig, da mit der Gestaltung der Abrasionsflächen das von *Slavicek* beschriebene Ziel erfüllt wird, ohne den gesamten Höckerabhang inklusive der Zentrikkontakte flacher zu neigen.

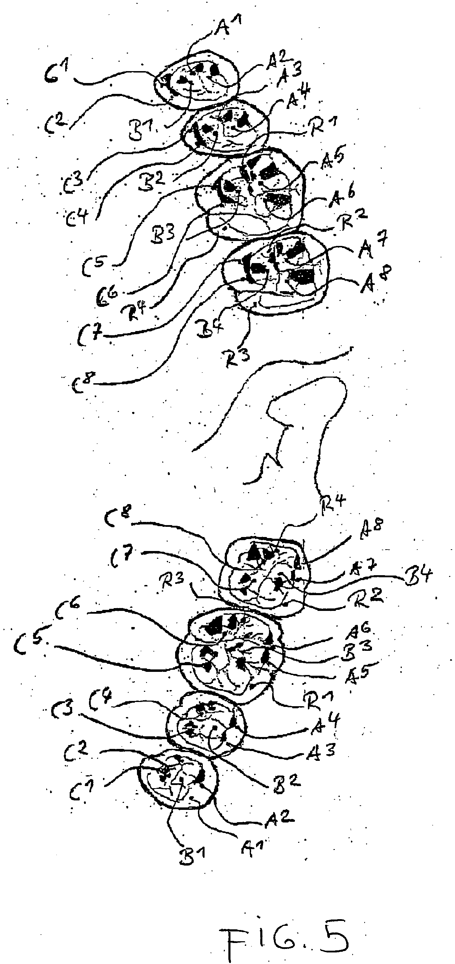

In **Fig. 5** sind die Zentrikkontakte - mit A¹ - A⁸, B¹ - B⁴ und C¹ - C⁸ und R, gekennzeichnet. Schraffiert dargestellt sind die erfindungsgemäßen Abrasionsflächen. Die Zentrikkontakte bleiben - durch die sie umgebenden Konkavitäten beditlgt - freistehend.

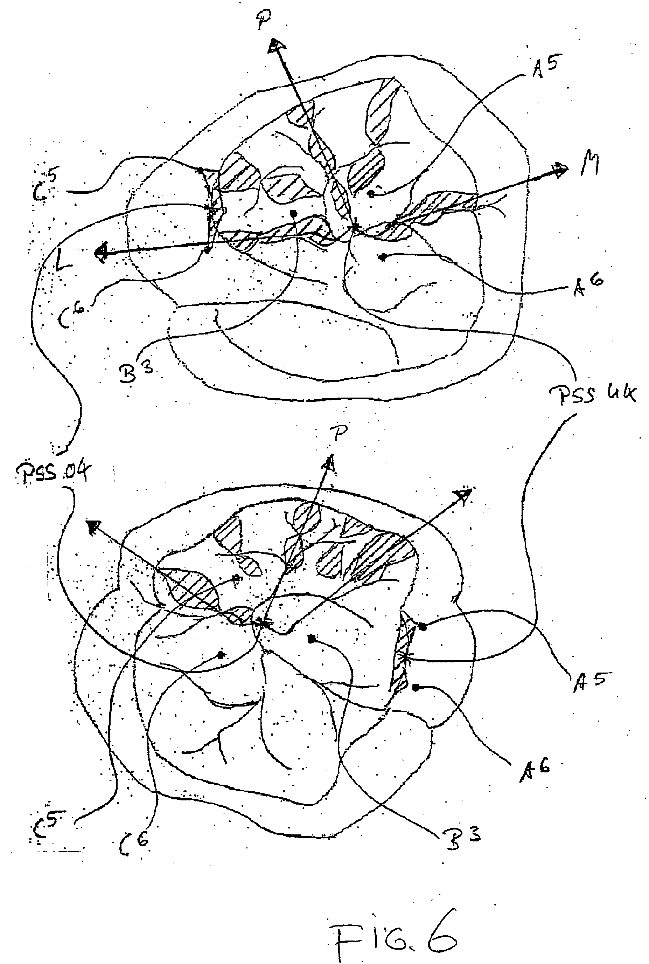

**Fig. 6** zeigt (als vergrößerter Ausschnitte aus Fig. 5) beispielhaft welche Abrasionen an einem Stampfhöcker und einer antagonistischen Fossa in den Funktionsbewegungen erfindungsgemäß angelegt werden. Mit **P** ist die Protrusions- mit **M** die Mediotrusions- mit L die Laterotrusionsbewegung in Pfeilrichtung dargestellt. Mit **PSS OK** ist die Position der Höckerspitze des oberen Stampfhöckers mit **PSS UK** die des unteren Stampfhöckers markiert. In diesem Zusammenhang ist zu erwähnen, dass die Details in den Figuren nicht maßstabsgerecht gezeichnet sind und die Maß- und Winkelangaben nicht an den Figuren nachgemessen werden können. Es wurde vielmehr auf den illustrativen Charakter Wert gelegt.

## Patentansprüche

1. Zahnsatz aus vorgefertigten Zähnen für die Prämolaren und/oder Molaren des Gebisses, bestehend aus ersten aus einer für den einen Kiefer vorgesehenen Gruppe von Prämolaren und/oder Molaren und aus zweiten aus einer für den anderen Kiefer vorgesehenen Gruppe von Antagonisten, wobei in der Fossa eines Prämolaren und/oder Molaren jeweils mindestens drei Zentrikkontaktpunkte (A, B, C) vorgesehen sind, an denen in Interkuspidationsstellung ein Stampfhöcker des Antagonisten zur Anlage gelangt, sofern die Prämolaren und/oder Molaren in einem Kausimulator in Okklusion gebracht werden, und die Kontaktpunkte (A, B, C) auf einer durch die Bewegung der Kieferkondylen des Simulators bestimmten Kompensationskurve (K) angeordnet sind, und die Zentrikkontaktpunkte (A, B, C) jeweils auf einem Kugelausschnitt liegen, **dadurch gekennzeichnet, dass** in wenigstens einer Bewegungsspur Abrasionsflächen dergestalt angelegt sind, dass alle eine glatte Laufbahn störenden Höckeranteile planiert sind, und die Anlage der Abrasionsflächen wenigstens einen der punktförmigen Zentrikkontakte nicht auflöst.

2. Zahnsatz nach Anspruch 1, **dadurch gekennzeichnet, dass** die Neigung der Abrasionsflächen auf der Mediotrusionsseite 3 bis 7 Grad, vorzugsweise 5 Grad geringer ist als auf der Laterotrusionsseite.

3. Zahnsatz nach Anspruch 1 oder 2, **dadurch gekennzeichnet, dass** die Neigung der Abrasionsflächen benachbarter Zähne sequentiell von anterior nach posterior abnimmt.

4. Zahnsatz nach Anspruch 3, **dadurch gekennzeichnet, dass** die sequentielle Abnahme 3 bis 7 Grad, vorzugsweise 5 Grad beträgt.

5. Zahnsatz nach Anspruch 3 oder 4, **dadurch gekennzeichnet, dass** die Neigung der Abrasionsfläche des Molaren 7 auf der Mediotrusionsseite zwischen 20 und 27 Grad, vorzugsweise 25 Grad, beträgt.

6. Zahnsatz nach einem der Ansprüche 1 bis 5, **dadurch gekennzeichnet, dass** die Neigung der Abrasionsfläche des Molaren 7 auf der Laterotrusionsseite 25 bis 32 Grad, vorzugsweise 30 Grad, beträgt.

7. Zahnsatz bestehend aus einem oder mehreren der Prämolaren bzw. Molaren 4, 5, 6 und 7 nach einem der Ansprüche 1 bis 6, **dadurch gekennzeichnet, dass** die Neigung der Abrasionsflächen folgendem Schema entspricht:
| Zahn | Neigung der Abrasionsflächen auf der | |
|---|---|---|
| | Mediotrusionsseite | Laterotrusionsseite |
| 4 | 40° | 45° |
| 5 | 35° | 40° |
| 6 | 30° | 35° |
| 7 | 25° | 30° |

8. Zahnsatz nach einem der Ansprüche 1 bis 7, **dadurch gekennzeichnet, dass** die Abrasionen in den Bewegungsspuren der Latero-Protrusions, der Imidiate Side Shift und der retrusiven Surtrusion angelegt sind.

## Claims

1. Denture set of prefabricated teeth for the premolars and/or molars of the dentition consisting of first teeth selected from a group of premolars and/or molars which is provided for one jaw and of second teeth selected from a group of antagonists which is provided for the other jaw wherein at least three centric contact points (A, B, C) being provided in the fossa of each premolar and/or molar on which a stamp cusp of the antagonist comes to rest in the position of intercuspidation if the premolars and/or molars are brought to occlusion within a chewing simulator and the contact points (A, B, C) being disposed on a compensation curve (K) defined by the movement of the jaw condyles of the simulator, and the centric contact points (A, B, C) being disposed on a spherical sector, **characterized in that** abrasions are disposed in at least one movement track such that all cusp portions disturbing a smooth path are flattened, and the creation of the abrasions does not break up at least one of the punctiform central contact points.

2. Denture set according to claim 1, **characterized in that** the inclination of the abrasion surfaces on the mediotrusion side is 3 to 7 degrees, preferably 5 degrees less than on the laterotrusion side.

3. Denture set according to claim 1 or 2, **characterized in that** the inclination of the abrasion surfaces of adjacent teeth decreases sequentially from anterior to posterior.

4. Denture set according to claim 3, **characterized in that** the sequential decrease is 3 to 7 degrees, preferably 5 degrees.

5. Denture set according to claim 3 or 4, **characterized in that** the inclination of the abrasion surface of the molar 7 on the mediotrusion side is between 20 and 27 degrees, preferably 25 degrees.

6. Denture set according to one of claims 1 to 5, **characterized in that** the inclination of the abrasion surface of the molar 7 on the laterotrusion side is 25 to 32 degrees, preferably 30 degrees.

7. Denture set consisting of one or more of the premolars or molars 4, 5, 6 and 7 according to one of claims 1 to 6, **characterized in that** the inclination of the abrasion surfaces corresponds to the following scheme:
| Tooth | Inclination of abrasion surfaces on the | |
|---|---|---|
| | mediotrusion side | laterotrusion side |
| 4 | 40° | 45° |
| 5 | 35° | 40° |
| 6 | 30° | 35° |
| 7 | 25° | 30° |

8. Denture set according to one of claims 1 to 7, **characterized in that** the abrasions are disposed in the movement tracks of latero-protrusion, immediate side shift and retrusive surtrusion.

## Revendications

1. Jeu de dents constitué de dents préfabriquées pour les prémolaires et/ou les molaires de la denture constitué de premières molaires et/ou prémolaires choisies parmi un groupe de prémolaires et/ou molaires prévu pour l'une des mâchoires et de deuxièmes prémolaires et/ou molaires choisies parmi un groupe de dents antagonistes prévu pour l'autre mâchoire, au moins trois points de contacts centriques (A, B, C) étant prévus dans la fosse d'une prémolaire et/ou molaire sur lesquels le sommet des pilons de l'antagoniste vient se placer en position d'intercuspidation pour autant que les prémolaires et/ou molaires soit mises en occlusion dans un articulateur, et dans lequel les points de contact (A, B, C) sont disposés sur une courbe de compensation (K) définie par le mouvement des condyles des mâchoires de l'articulateur, et dans lequel les points de contact centriques (A, B, C) sont placés sur une section de sphère, **caractérisé en ce que** dans au moins une trajectoire de mouvement des abrasions sont présents d'une manière à ce que tous les secteurs des sommets des pilons gênant une trajectoire lisse soient égalisés, et que les abrasions ne dissolvent pas au moins un des points de contacts.

2. Jeu de dents selon la revendication 1, **caractérise en ce que** l'inclinaison des surfaces d'abrasion sur le côté mediotrusional est entre 3 et 7 dégrées, de préférence 5 dégrées moins que sur le côté latérotrusional.

3. Jeu de dents selon la revendication 1 ou 2, **caractérise en ce que** l'inclinaison des surfaces d'abrasion de dents adjacentes décroit séquentiellement d'antérieur vers postérieur.

4. Jeu de dents selon la revendication 3, **caractérise en ce que** la décroissance séquentielle est de 3 à 7 dégrées, de préférence de 5 dégrées.

5. Jeu de dents selon la revendication 3 ou 4 **caractérise en ce que** l'inclinaison de la surface d'abrasion de la molaire 7 sur le coté médiotrusional est entre 20 et 27 dégrées, de préférence de 25 dégrées.

6. Jeu de dents selon l'une quelconque des revendications 1 à 5, **caractérise en ce que** l'inclinaison de la surface d'abrasion de la molaire 7 sur le côté latérotrusional est entre 25 et 32 dégrées, de préférence de 30 dégrées.

7. Jeu de dents constitué d'une ou plusieurs des prémolaires ou molaires 4, 5, 6 et 7 selon l'une quelconque des revendications 1 à 6, **caractérisé en ce que** l'inclinaison des surfaces d'abrasion suit le schème suivant:
| Dent | inclinaison des surfaces d'abrasion | |
|---|---|---|
| | côté médiotrusional | côté latérotrusional |
| 4 | 40° | 45° |
| 5 | 35° | 40° |
| 6 | 30° | 35° |
| 7 | 25° | 30° |

8. Jeu de dents selon l'une quelconque des revendications 1 à 7, **caractérise en ce que** les abrasions sont disposées dans la trajectoire de mouvement de la latéro-protrusion, de l'Imidiate Side Shift et de la surtrusion rétrusive.
